Europäisches Patentamt

European Patent Office

Office européen des brevets

(11) Publication number: **0 211 474**
A1

## (12) EUROPEAN PATENT APPLICATION

(21) Application number: 86303462.5

(22) Date of filing: 07.05.86

(51) Int. Cl.⁴: **F 04 B 43/04**
F 04 B 17/04, H 02 K 33/10

(30) Priority: 07.05.85 NZ 212000

(43) Date of publication of application:
25.02.87 Bulletin 87/9

(84) Designated Contracting States:
AT BE CH DE FR GB IT LI LU NL SE

(71) Applicant: ELECTRONIC COMPONENTS COMPANY LTD
Titi Kaveka
Rarotonga Cook Islands(NZ)

(72) Inventor: Hogg, Kenneth Alan

Waikino(NZ)

(74) Representative: Richards, David John et al,
Page, White & Farrer 5, Plough Place New Fetter Lane
London EC4A 1HY(GB)

(54) Control circuit for the reciprocating movement of a solenoid armature.

(57) In the preferred form of the invention, the interruptor includes a blade mounted to a portion of an armature of a solenoid operated diaphragm pump, said control circuit providing operation of said solenoid and thus serving as an improvement on mechanical contacts which normally provide control for such devices.

FIG. 1.

EP 0 211 474 A1

Croydon Printing Company Ltd.

Improvements in and relating to Control Devices

This invention relates to control devices. More particularly but not exclusively, the invention concerns control devices suitable for controlling the active parts of a reciprocating pump.

Previously, it has been known to control the stroke and operation of solenoid and the like electrical pumps by way of mechanical means. There are, however, many difficulties and disadvantages associated with such mechanical control means. One disadvantage is that of radio interference where a contact type mechanical control device is applied on a solenoid pump in a motor vehicle. Also significant mechanical noise may be associated with such systems. Also, such a contact control means is subject to deterioration of the contacts with use, the contact short-circuit being difficult to achieve if, for example, the contacts are fouled in any way or the contacts are consumed by sparking.

It is accordingly an object of this invention to provide a control device with which the above difficulties and disadvantages associated with previously known mechanical devices are at least minimised.

According to the invention, there is provided a control device including first and second pairs of electrically operated signal emitters and receivers spaced a predetermined distance apart, said emitters adapted for emitting signals in spaced signal pathways, a reciprocably moveable signal interruptor provided for interruption of said signals as it reciprocates between the emitters and receivers in the signal pathways, first and second switch means connected to the signal receivers, a third switch means associated with the first and second switch means and a power source for the circuit, the arrangement being one in which non-interruption (or in the alternative, interruption) of both signal pathways operates the third switch means and causes a latched condition in the circuit switches such that the interruptor is urged into the zone of the signal pathways (or in the alternative out of the signal pathways) until both of such signal pathways are interrupted, (or non-interrupted) whereupon the circuit switches are oppositely latched for return of the interruptor.

In the preferred form of the invention, the interruptor includes a blade mounted to a portion of an armature of a solenoid operated diaphragm pump and wherein said control controls operation of said solenoid.

The signal emitters may include light emitting diodes and the signal receivers may comprise light-sensitive transistors. It will, however, be apparent that the arrangement of the invention is not limited to photoelectric signal means but that any convenient arrangement such as an ultra sonic signal could conveniently be provided.

Preferably, the switch means are also suitable transistors.

The invention will now be described by way of illustration only with reference to the accompanying drawings in which:

Figure 1    is a block diagram showing schematically the operation of a control device according to the invention;

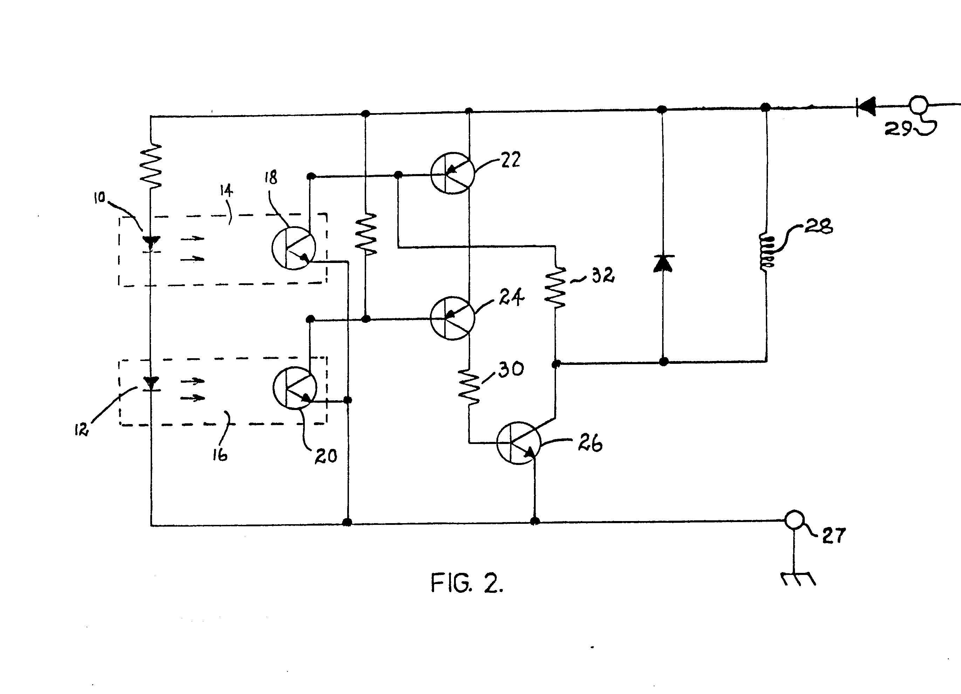

Figure 2    is a circuit diagram of one presently preferred exemplary embodiment of a control device of the invention.

Referring to the drawings, light emitting diodes 10 and 12 (provided with or without "blinkers" to control beam spread) are provided for the emission of light in signal zones indicated by the dotted lines referenced 14 and 16.  Light-sensitive transistors 18 and 20 are provided at a position to receive the light signal.  Thus, a pair of signal zones 14 and 16 are provided in a predetermined spaced relation.

A first switch 22 is connected to the light-sensitive transistor 18 and a second switch 24 is connected to the light-sensitive transistor 20.  Switches 22 and 24 are interconnected in series.  A third switch 26 is driven by the current passing through switch 22, switch 24 and resistor 30.  Switch 26 provides the return path for current passing through the solenoid windings 28. Switches 22, 24 and 26 comprise transistors of the conventional kind.  A resistor 32 is connected between switch 26 and switch 22, this resistor returns control current for the first switch 22 thus providing a latching action to switch 22 via the positive feedback.

An interruptor, in this form a blade 34 conveniently provided on the end of a reciprocable member (not shown) is adapted to reciprocate in the signal zones 14 and 16.

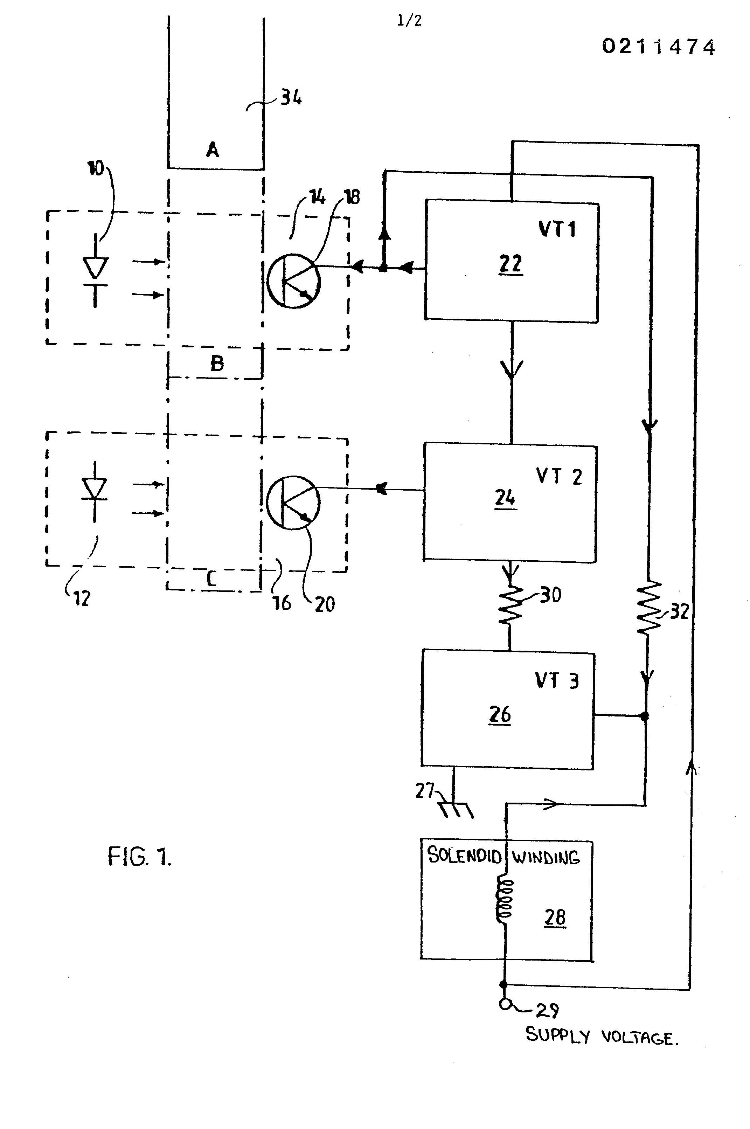

In operation, blade 34 is shown at its rest position in unbroken lines in Figure 1. Activation of the circuitry imparts a forward stroke to the interruptor blade 34 so that it moves through the first signal zone 14 to a position indicated in broken lines as shown at B in Figure 1.

With, for example, the diaphragm of a diaphragm pump connected at the end of the reciprocable member remote from the blade 34 at a rest position as shown by A in Figure 1, the pump is in its rest position, the power is off and both light beams in the signal zones 14 and 16 are uninterrupted. When power is applied to the circuit, both light sources 10 and 12 are activated to emit light in the signal zones 14 and 16. This light is received by the photo-transistors 18 and 20 causing increased current to be passed through the circuits so that switches 22, 24 and 26 are switched on.

As switch 26 is activated, the collector voltage falls to a low voltage. This causes switch 22 to be maintained in an on condition by the flow of current through resistor 32 connected between the base of switch 22 and the collector of switch 26, positive feedback latching the circuit.

**0211474**

Due to the current passing through switch 26, the pump windings 28 cause movement of the diaphragm which in turn causes the blade 34 mounted on the armature to begin to interrupt the light emitted from the light emitting diode 10. As the blade 34 continues on its forward stroke, the light emitted by the diode 10 is eventually completely interrupted as indicated generally at B in Figure 1. In this position, although photo-transistor 18 contributes little current to the base of 22, because of current passing through resistor 32 to switch 22, switch 22 remains switched on as a result of the formation of a latch between switches 22, 24 and 26 in this position of the blade 34.

Upon continuation of the forward stroke of the blade 34, the light signal in the signal zone 16 begins progressively to become interrupted by the blade 34 until such time as there is insufficient base current supplied to switch 24 by photo-transistor 20 to allow it to remain fully switched on. As switch 24 turns off, the current passed to the base of switch 26 drops and switch 26 in turn begins to switch off.

As switch 26 turns off, the voltage in its collector rises to a level which prevents sufficient current to flow through resistor 32 to return current to switch 22. Thus, switches 22, 24 and 26 are switched off when the signals in signal zones 14 and 16 are entirely interrupted as shown by C in Figure 1.

As switch 26 has been turned off, windings 28 of the solenoid pump no longer influence the solenoid itself to cause further movement of the reciprocating armature provided with blade 34. This is the terminal position of the forward stroke and the diaphragm of the pump will be fully extended. As the armature begins its return stroke, the light signal in zone 16 is progressively uninterrupted but, even when the light from light emitting diode 12 is uninterrupted, current is not passed by switch 24 or 26 because switch 22 is not yet turned on as the light beam in zone 14 is still interrupted, thus not allowing photo-transistor 18 to supply the base current to transistor 22.

Progressive return of the blade 34 permits sufficient light from light emitting diode 10 to be received by the light sensitive transistor 18 to activate switch 22 once again. When this switch begins to turn on, current is passed to switch 24, and as zone 16 is already uninterrupted switch 24 turns on and passes current to switch 26, which in turn applies current to the windings 28 and thus the return of blade 34 is arrested and switches 22, 24 and 26 become latched on by current passing through resistor 32 to switch 22. As switch 26 is now latched on the diaphragm begins its forward stroke once again and the pumping cycle is continued until such time as the power source 29 is switched off.

The applicant believes that the control device of the invention will be advantageous firstly in that the trigger threshold of the electronic switches can be made to be a very small fraction of the value of the uninterrupted current from the photo transistors. By this means, the performance of the circuit is affected to an insignificant degree by any deterioration or degradation of the light source and receiver units with time. For example, with a beam width of approximately twenty thou and an uninterrupted current of 1,000 uA, the threshold may be set at ten per cent of this value. With these parameters, the threshold is 100 uA. If the uninterrupted current drops after a period of time to approximately half its original value, to reach the 100 uA threshold, the interruption required would become eighty per cent and would result in a shift of approximately 2 thousanths of an inch for an uninterrupted current shift in the ratio of 2:1.

Furthermore, the stroke of the reciprocating blade 34 can be reduced by a reduction in the supply voltage. Thus, by making the current supplied to the light emitting sources dependent on the supply voltage, it is possible to cause the beam or light source intensity to reduce as the supply voltage reduces. This is believed to be advantageous as it causes the diaphragm movement of a pump required to trigger the system to reduce under lower voltage conditions. This is complementary to the fact that the motive power supplied by the windings is reduced when the supply voltage is reduced. The effect may be increased by connecting a zener diode in series with the light emitting diodes 10 and 12.

For other control applications, the present embodiment may be expanded to include systems able to select from a multiplicity of sensors to be adaptable to the requirements of said system.

Also, when the control device of the invention is applied to a pump operated by a solenoid in a motor vehicle, the stroke of the reciprocating blade may be reduced by reduction in temperature. Thus, by making the threshold of the electronic switches increase as the temperature drops, it is possible to make the movement required by the diaphragm to reduce as the temperature falls. This is an advantage as fluids to be pumped increase in viscosity as the temperature falls and the diaphragm also tends to stiffen at lower temperatures while the motive power available tends to reduce with a lower temperature.

Further, the current to the armature windings is switched at a rate that is related to the rate of change of diaphragm position which in turn is relatively slow as the diaphragm is fluid damped. This arrangement is advantageous over a contact type system and results in dramatic reduction of radio frequency interference when a control device in accordance with the present invention is used.

In an alternative arrangement of the invention it is to be appreciated of course that the on/off and interrupted/non-interrupted relationship of the interruptor and the emitters and receivers may be reversed to provide a similar operation. Further, the on/off
nature of the switching means referred to in the
specification is not essential to the invention so long as
the relationship between the integers is retained.

It is also to be appreciated that several variations
of sequential circuit design using flip flops and/or logic
circuitry may be used as the control means. The use of
solid state circuitry, in being contactless, requires no
moving parts. Thus, failures in previous designs due to
mechanical failure such as contact breakdown are overcome
improving unit reliability. Such a solid state apparatus
is also of particular use in applications encountering
high stress or requiring high degrees of reliability.

Whilst the invention is described with reference to a
particular circuit diagram, and to switching on or off of
the switches in the manner described, it is to be
appreciated that in alternative forms of the invention,
circuitry switching in a substantially opposite manner can
be alternatively provided, and in particular, where the
operation of the switching mechanisms and the movement of
the reciprocator blade 34 is provided in a substantially
opposing manner.

In alternative embodiments of the invention, the
interruptor can be moved by alternative means, such as by
purely mechanical means as distinct from the
electro-mechanical means of the present arrangement,
thermo-mechanical means such as Bimetallic strips,

0211474

actuated thermosensors and the like, or alternatively, by chemicals or other driving means.

Although the invention has been described and illustrated with reference to a presently preferred embodiment, it will be appreciated to those skilled in the art that many variations and/or modifications are possible without departing from the scope of the invention as defined in the appended claims.

CLAIMS:

0211474

1. A control device including first and second pairs of electrically operated signal emitters and receivers spaced a predetermined distance apart, said emitters adapted for emitting signals in spaced signal pathways, a reciprocably moveable signal interruptor provided for interruption of said signals as it reciprocates between the emitters and receivers in the signal pathways, first and second switch means connected to the signal receivers, a third switch means associated with the first and second switch means and a power source for the circuit, the arrangement being one in which non-interruption (or in the alternative, interruption) of both signal pathways operates the third switch means and causes a latched condition in the circuit switches such that the interruptor is urged into the zone of the signal pathways (or in the alternative out of the signal pathways) until both of such signal pathways are interrupted, (or non-interrupted) whereupon the circuit switches are oppositely latched for return of the interruptor.

2. Apparatus as claimed in any one of the preceding claims wherein the interruptor is formed in a material capable of attenuating said signal to said receiver when in the signal zone.

3. Apparatus as claimed in claim 1 wherein the interruptor includes a blade portion mounted to an armature of a solenoid controlled by said control device.

4. Apparatus as claimed in claim 3 wherein said interruptor is connected with a solenoid operated shaft of a diaphragm pump and wherein said control means is provided to control operation of said solenoid and thus, said pump.

5. Apparatus as claimed in any one of the preceding claims wherein means is provided to control beam spread of the signal.

6. Apparatus as claimed in any one of the preceding claims wherein the signals are light signals.

7. Apparatus as claimed in claim 6 wherein beam spread control means is in the form of a mechanical shield.

8. Apparatus as claimed in any one of the preceding claims 1 to 4 wherein the signals are ultrasonic signals.

9. Apparatus as claimed in any one of the preceding claims 1 to 4 wherein the signal is a magnetic signal.

10. Apparatus as claimed in any one of the preceding claims wherein the spacing of the first and second pairs of signal emitters and receivers are adjustable in their spacing relative to one another.

11. A control device as hereinbefore described with reference to the accompanying drawings.

0211474

FIG. 1.

FIG. 2.

## European Patent Office

# DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 707 338 (HILFORD) * column 5, line 22 - column 6, line 49; claims 1, 2; figure 4 * | 1-7 | F 04 B 43/04<br>F 04 B 17/04<br>H 02 K 33/10 |
| | --- | | |
| X | DE-B-2 614 973 (ANDREAS HOFER HOCHDRUCKTECHNIK) * page 3, line 20 - page 5, line 7; figure 1; claim 1£ * | 1,5,9, 10 | |
| A | | 2,3 | |
| | --- | | |
| A | FR-A-2 274 801 (EBERSPACHER) * page 3, lines 1-25; figures 1, 2 * | 1-7 | |
| | --- | | |
| A | FR-A-2 498 028 (FACET ENTERPRISES) * page 4, lines 6-35; page 5, line 37 - page 7, line 21; figures 2, 3, 4-6 * | 1,4,5, 9 | TECHNICAL FIELDS SEARCHED (Int. Cl.4)<br><br>F 04 B 17/00<br>F 04 B 43/00<br>F 04 B 45/00<br>F 04 B 49/00<br>F 02 M 37/00<br>H 02 K 33/00<br>G 01 V 9/00 |
| | ----- | | |

The present search report has been drawn up for all claims

| Place of search | Date of completion of the search | Examiner |
|---|---|---|
| BERLIN | 08-08-1986 | BEITNER M.J.J.B. |